# FASCICULE DE BREVET EUROPEEN

(11) **EP 3 625 115 B1**
(45) Date de publication et mention de la délivrance du brevet: **27.12.2023**
(21) Numéro de dépôt: 18735628.2
(22) Date de dépôt: 03.05.2018
(51) Int. Cl.: B62D 55/247

(54) **CHENILLE DESTINÉE À ÉQUIPER UN VÉHICULE**
RAUPE ZUR AUSRÜSTUNG EINES FAHRZEUGS
CATERPILLAR FOR A VEHICLE

(30) Priorité: 15.05.2017 FR 1700532
(43) Date de publication de la demande: 25.03.2020
(73) Titulaire: NEXTER Systems, 78034 Versailles Cedex (FR)
(72) Inventeur: BONNETAIN, Fr d ric, 18023 Bourges (FR)
(74) Mandataire: Cabinet Chaillot
(86) Numéro de dépôt international: PCT/FR2018/051112
(87) Numéro de publication internationale: WO 2018/211197

(56) Documents cités:
- US-A- 2 746 812
- US-A- 2 748 827
- US-A- 3 934 664
- US-A1- 2010 282 526
- US-A1- 2011 301 785

## Description

Le domaine technique de l'invention est celui des chenilles destinées à équiper un véhicule.

Les chenilles comportent d'un façon classique une bande formant une boucle fermée, bande comportant une face de roulement destinée à venir en contact avec le sol et une face interne destinée à coopérer avec au moins un barbotin d'entraînement et au moins un galet de guidage.

Les chenilles traditionnelles sont formées de maillons métalliques articulés les uns aux autres et qui peuvent porter un patin au niveau de la face de roulement. On connaît aussi des chenilles dites souples qui sont réalisées en matériau élastomère armé et qui présentent l'avantage d'être légères, silencieuses et de permettre au véhicule de progresser à une vitesse supérieure.

Toutes les chenilles, qu'elles soient formées de maillons ou qu'elles soient réalisées en élastomère, présentent l'inconvénient de ne pas découpler les sollicitations liées au guidage et à la charge et les contraintes liées au contact avec le sol. Les sollicitations de guidage et de charge sont reçues principalement par la face interne. Les contraintes liées au contact avec le sol sont reçues par la face de roulement de la chenille.

Il en résulte une perturbation du guidage de la chenille qui est provoquée par le contact avec le sol. Ceci provoque une usure excessive de la face interne ainsi que des dents des barbotins d'entraînement et peut conduire, dans des cas extrêmes, au déchenillage.

C'est le but de l'invention que de proposer une chenille ne présentant pas de tels inconvénients.

Ainsi la chenille selon l'invention permet de découpler la fonction d'entraînement par la motorisation du véhicule et la fonction de liaison de la chenille avec le sol.

Il en résulte un entraînement fiable de la chenille, limitant l'usure et les risques de déchenillage.

Il en résulte également une meilleure tenue de route pour le véhicule.

Par ailleurs la chenille selon l'invention permet de limiter la pression au sol.

Les brevets américains US2011/301785 A1, US2010/282526 A1, US3934664 A, US2748827 A et US2746812 A divulguent une chenille selon le préambule des revendications 1 et 4.

Ainsi l'invention a pour objet une chenille destinée à équiper un véhicule, chenille comportant une bande formant une boucle fermée, bande comportant une face de roulement destinée à venir en contact avec le sol et une face interne destinée à coopérer avec au moins un barbotin d'entraînement du véhicule et au moins un galet de guidage, chenille dans laquelle la bande comporte au moins un premier ruban fermé interne qui porte la face interne et au moins un deuxième ruban fermé externe qui porte la face de roulement, le premier ruban et le deuxième ruban étant disposés à distance l'un de l'autre et reliés l'un à l'autre par au moins un moyen de liaison, la chenille étant caractérisée en ce qu'elle est réalisée en au moins un matériau élastomère et les moyens de liaison pourront être formés par des lames comprenant au moins un matériau métallique enrobé d'élastomère et qui sont localement surmoulées avec le premier ruban et le deuxième ruban.

Les lames pourront être régulièrement réparties le long de la bande.

Selon un mode particulier de réalisation, la chenille comporte un premier jeu de lames, ou lames externes, réparties le long des deux bords latéraux de la chenille et un deuxième jeu de lames, ou lames internes, disposées entre les lames externes.

L'invention a également pour objet une chenille destinée à équiper un véhicule, chenille comportant une bande formant une boucle fermée, bande comportant une face de roulement destinée à venir en contact avec le sol et une face interne destinée à coopérer avec au moins un barbotin d'entraînement du véhicule et au moins un galet de guidage, chenille dans laquelle la bande comporte au moins un premier ruban fermé interne qui porte la face interne et au moins un deuxième ruban fermé externe qui porte la face de roulement, le premier ruban et le deuxième ruban étant disposés à distance l'un de l'autre et reliés l'un à l'autre par au moins un moyen de liaison, les moyens de liaison sont formés par des profils comportant au moins un matériau élastomère et qui s'étendent transversalement d'un bord latéral à l'autre bord latéral de la chenille et qui sont régulièrement répartis sur toute la longueur de la chenille, la chenille étant caractérisée en ce que les profils comprennent des formes hexagonales creuses reliées aux rubans par des bras.

L'invention a également pour objet une chenille destinée à équiper un véhicule, chenille comportant une bande formant une boucle fermée, bande comportant une face de roulement destinée à venir en contact avec le sol et une face interne destinée à coopérer avec au moins un barbotin d'entraînement du véhicule et au moins un galet de guidage, chenille dans laquelle la bande comporte au moins un premier ruban fermé interne qui porte la face interne et au moins un deuxième ruban fermé externe qui porte la face de roulement, le premier ruban et le deuxième ruban étant disposés à distance l'un de l'autre et reliés l'un à l'autre par au moins un moyen de liaison, les moyens de liaison sont formés par des profils comportant au moins un matériau élastomère et qui s'étendent transversalement d'un bord latéral à l'autre bord latéral de la chenille et qui sont régulièrement répartis sur toute la longueur de la chenille, la chenille étant caractérisée en ce que les profils comprennent deux jeux de languettes, chaque jeu de languettes s'étendant d'un des rubans jusqu'à une lame médiane, les languettes liées au ruban interne étant disposées en alternance avec les languettes liées au ruban externe.

Avantageusement, chaque ruban pourra comporter au moins une nappe de câbles de renfort métallique.

La face interne portée par le premier ruban pourra comporter deux zones latérales au niveau desquelles seront aménagées des encoches destinées à coopérer avec des dents du ou des barbotin(s) d'entraînement du véhicule.

La face interne de la chenille pourra porter au moins un bloc guide destiné à coopérer avec au moins un sillon porté par les ou les barbotins et le ou les galets de guidage.

La face interne de la chenille pourra porter au moins une languette longitudinale destinée à coopérer avec au moins une rainure portée par les ou les barbotins et le ou les galets de guidage.

L'invention sera mieux comprise à la lecture de la description qui va suivre de différents modes de réalisation, description faite en référence aux dessins annexés et dans lesquels :
- La figure 1 montre schématiquement un véhicule équipé de chenilles selon l'invention ;
- La figure 2a est une vue en coupe transversale d'un mode de réalisation d'une chenille selon l'invention, coupe réalisée suivant le plan dont la trace AA est repérée à la figure 1, donc au niveau du barbotin ;
- La figure 2b est une vue latérale partielle du barbotin seul ;
- La figure 2c est une vue partielle en coupe de la chenille isolée du barbotin, la chenille étant coupée par un plan dont la trace BB est repérée à la figure 2a ;
- Les figures 3a, 3b, 3c et 3d sont des vues latérales partielles de variantes de réalisation de la chenille selon l'invention.

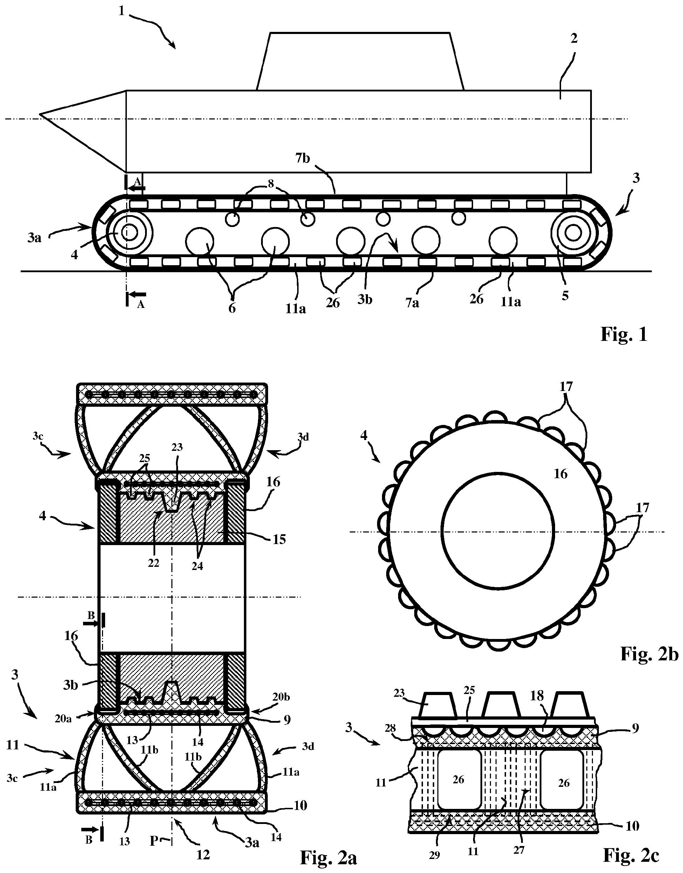

En se reportant à la figure 1, un véhicule blindé chenillé 1 comporte une caisse 2 qui est reliée au sol au niveau de chaque côté latéral de la caisse par au moins une chenille 3. Ce véhicule comporte ici deux chenilles 3 qui s'étendent sur sensiblement toute la longueur du véhicule.

Chaque chenille 3 est reliée à des moyens de propulsion non représentés (tel un groupe motopropulseur) par des moyens d'entraînement. Les moyens d'entraînement font tourner au moins un barbotin d'entraînement 4 qui coopère avec la chenille par des dents 17 qui s'engagent dans des encoches 18 de la chenille 3 (voir figures 2b et 2c).

La chenille 3 est ici une chenille souple qui est réalisée en au moins un matériau élastomère, tel que le caoutchouc, et elle comporte une bande formant une boucle fermée. Cette bande comporte une face de roulement 3a destinée à venir en contact avec le sol et qui pourra porter des reliefs (non représentés) permettant de faciliter son accrochage sur le sol. La bande comporte aussi une face interne 3b qui est destinée à coopérer avec le barbotin d'entraînement 4.

La chenille 3 est par ailleurs enroulée sur une roue arrière 5 qui porte également des dents 17.

Une fois mise en place sur le véhicule la chenille comporte donc d'une façon classique un brin inférieur 7a qui est en contact avec le sol et sur lequel le véhicule 1 s'appuie par l'intermédiaire du barbotin 4, de la roue arrière 5 et de galets d'appui 6. Roue 5, barbotin 4 et galets 6 sont reliés à la caisse 2 du véhicule par des moyens de suspension (non représentés).

Le barbotin 4, la roue arrière 5 et les galets d'appui 6 portent également un sillon médian 22 qui reçoit des blocs guides 23 (figures 2a et 2c) solidaires de la face interne 3b de la chenille 3. Pour compléter le guidage, barbotin, roue arrière et galets d'appui portent également des rainures circulaires 24 (ici quatre rainures) qui sont disposées de part et d'autre du sillon médian 22 et qui reçoivent des languettes 25 solidaires de la face interne 3b de la chenille.

Les languettes 25 forment des excroissances de hauteur plus réduite que celle des blocs guide 23. Elles viennent compléter le guidage en augmentant la surface de contact relative entre le ruban interne 9 et le barbotin, la roue et les galets. Elles complètent le guidage réalisé par les blocs guide 23.

La chenille 3 comporte aussi un brin supérieur 7b dont les mouvements sont réduits en amplitude par des galets tendeurs 8 liés à la caisse 2 du véhicule.

Les figures 2a et 2c permettent de préciser la structure de la chenille selon l'invention.

La bande de la chenille 3 comporte au moins un premier ruban fermé interne 9 qui porte la face interne 3b et au moins un deuxième ruban fermé externe 10 qui porte la face de roulement 3a.

Ainsi, conformément à l'invention, le premier ruban 9 et le deuxième ruban 10 sont disposés à distance l'un de l'autre. Ils sont reliés l'un à l'autre par au moins un moyen de liaison 11.

La distance entre le premier ruban 9 et le deuxième ruban 10 sera choisie en fonction des caractéristiques du véhicule devant être équipé et des performances recherchées.

Les moyens de liaison sont ici formés par des lames 11 comprenant au moins un matériau métallique enrobé d'élastomère et qui sont localement surmoulées avec le premier ruban 9 et le deuxième ruban 10.

On a représenté schématiquement à la figure 2c plusieurs lames 11 qui sont espacées les unes des autres par des zones vides 26. Chaque lame 11 comporte une ossature métallique 27, qui est schématisée par des pointillés sur la figure, et qui s'étend d'un ruban 9 à l'autre ruban 10. Ossature qui est enrobée de matériau élastomère et qui s'accroche à des armatures métalliques 28 et 29 qui sont surmoulées respectivement dans le premier ruban 9 et dans le deuxième ruban 10.

Une telle structure est analogue à celle de la carcasse d'un pneumatique radial et les techniques de fabrication de tels pneumatiques sont transposables à la réalisation de la chenille selon l'invention.

Selon le mode de réalisation qui est représenté aux figures 2a et 2c, la chenille 3 comporte deux jeux de lames :
- un premier jeu de lames dites lames externe 11a qui sont réparties le long des deux bords latéraux 3c et 3d de la chenille 3 (figure 2a) ;
- un second jeu de lames dites lames internes 11b disposées entre les lames externes 11a (figures 2a et 2c).

Selon la configuration représentée ici, les lames internes 11b sont reliées au premier ruban 9 au voisinage de ses deux bords latéraux et elles sont reliées au deuxième ruban 10 au voisinage d'une partie médiane 12 de la chenille 3, partie située au niveau d'un plan P de symétrie médian, perpendiculaire au premier ruban 9 et au deuxième ruban 10.

Ainsi suivant la coupe de la figure 2a, l'assemblage des lames internes 11a et 11b a sensiblement la forme générale de la lettre M.

Comme on le voit sur la figure 1, les lames externes 11a sont également séparées les unes des autres par des zones vides 26.

La structure des lames externes 11 est identique à celle des lames internes 11b. Ces lames comportent donc une ossature métallique qui s'étend d'un ruban 9 à l'autre ruban 10. Ossature qui est enrobée de matériau élastomère et qui s'accroche à des armatures métalliques 28 et 29 qui sont surmoulées respectivement dans le premier ruban 9 et le deuxième ruban 10.

Les lames 11 assurent le maintien à distance l'un de l'autre des deux rubans 9 et 10 tout en conférant une certaine souplesse à la liaison. La chenille 3 a donc une certaine souplesse transversale autorisant des déformations localisées du ruban externe 10 occasionnées par des pierres ou obstacles situés sur le sol. Ces déformations reçues par le ruban externe 10 ne sont pas transmises au ruban interne 9 et elles sont absorbées par les lames 11 qui forment une carcasse transversale à la chenille.

Il en résulte un confort de conduite analogue à celui qui pourrait être obtenu avec un véhicule à roues.

Par ailleurs la distance maintenue entre les rubans 9 et 10 assure une isolation thermique entre les deux rubans. Il en résulte un échauffement moindre de la chenille 3.

Enfin la chenille selon l'invention peut avoir (comme représenté à la figure 2a) un ruban externe 10 qui est plus large que le ruban interne 9. Il en résulte une réduction de la pression au sol, donc une amélioration des performances de motricité.

Comme on le voit à la figure 2a, chaque ruban 9 et 10 comporte également une nappe 13 de câbles 14 de renfort métallique. De telles nappes sont classiques dans le domaine des chenilles souples. Elles permettent de limiter l'allongement de la chenille 3 et améliorent sa résistance mécanique.

Il sera possible de prévoir une ou plusieurs nappes 13 sur chaque ruban 9, 10 en fonction des performances souhaitées.

On voit sur les figures 2a et 2b que le barbotin 4 comporte une partie cylindrique médiane 15 qui porte sur chacune de ses faces un disque 16. Les disques 16 portent (tout comme la roue arrière 5) des dents périphériques 17 qui engrènent dans des encoches 18 qui sont aménagées sur des zones latérales 20a et 20b de la face interne 3b du premier ruban 9.

Le guidage de la chenille est assuré comme précisé précédemment par la coopération des blocs guides 23 avec le sillon médian 22 ainsi que par celle des rainures circulaires 24 avec les languettes 25.

L'entraînement de la chenille par les dents 17 s'effectue donc sans usure excessive, la chenille étant positionnée latéralement par le sillon 22 et les rainures 24.

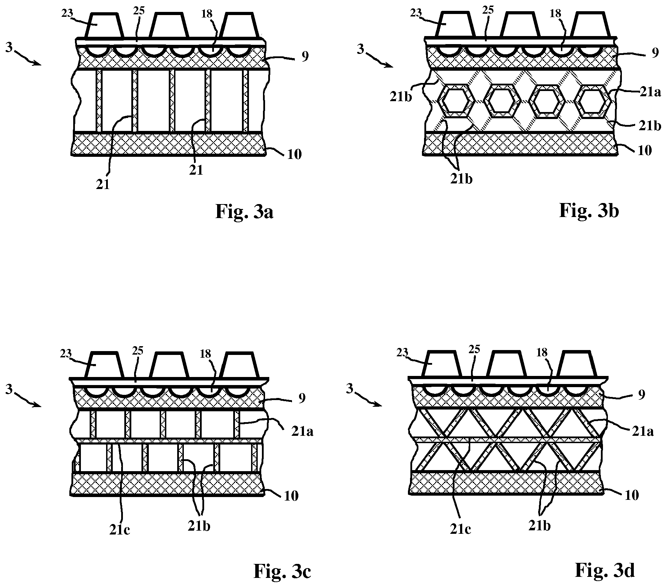

Les figures 3a à 3d montrent d'autres modes de réalisation de la chenille selon l'invention.

Ces modes diffèrent tous du précédent en ce que les moyens de liaison entre les rubans 9 et 10 ne sont pas formés par des lames longitudinales réparties le long du périmètre des deux rubans mais sont constitués par des profils 21 en matériau élastomère qui s'étendent transversalement d'un bord latéral 3c à l'autre bord latéral 3d de la chenille 3. Ces profils 21 sont par ailleurs régulièrement répartis sur toute la longueur de la chenille 3.

Les profils 21 pourront avoir des formes diverses en fonction des caractéristiques d'amortissement souhaitées pour la liaison entre les deux rubans 9 et 10.

La figure 3a montre ainsi une chenille dans laquelle les profils 21 ont la forme de lamelles 21 transversales qui relient le ruban interne 9 et le ruban externe 10.

Lors du déplacement du véhicule 1, chaque lamelle 21 pourra s'écraser et amortir les chocs. Les lamelles 21 s'étendent sur toute la largeur de la chenille 3. Elles sont réalisées dans le même matériau élastomère que les rubans 9 et 10 et au cours de la même phase de fabrication par injection.

Elles pourront (comme dans le mode de réalisation précédent) être dotées de renforts métalliques qui s'accrocheront à des armatures métalliques surmoulées dans le premier ruban et le deuxième ruban.

La figure 3b montre une chenille 3 dans laquelle les profils 21 comprennent des formes hexagonales creuses 21a reliées aux rubans 9 et 10 par des bras 21b. Cette structure des profils confère une rigidité supérieure. La rigidité pourra être adaptée en jouant sur les dimensions et la section des formes hexagonales.

La figure 3c montre une chenille 3 dans laquelle les profils 21 comprennent deux jeux de languettes 21a et 21b qui s'étendent d'un des rubans 9 ou 10 jusqu'à une lame médiane 21c. Les languettes 21a liées au ruban interne 9 sont disposées en alternance avec les languettes 21b liées au ruban externe 10. Ce mode de réalisation confère à la chenille 3 une rigidité supérieure à celui de la figure 3a.

Enfin la figure 3d montre une chenille 3 dans laquelle les profils 21 comportent également une lame médiane 21c et des languettes 21a et 21b qui relient la lame médiane 21c, respectivement au ruban interne 9 et au ruban externe 10. Ce mode diffère du précédent en ce que les languettes 21a et 21b ne sont plus perpendiculaires aux rubans 9 et 10 mais sont disposées de façon inclinées et forment ainsi des triangles dont les sommets sont disposés alternativement au niveau des rubans et de la lame médiane.

D'autres formes sont envisageables pour réaliser les profils 21.

Dans tous les cas les profils 21 pourront être réalisés en élastomère et obtenus par injection simultanée avec les rubans 9 et 10.

Ils pourront également être solidaires d'une carcasse métallique et surmoulés avec les rubans 9 et 10.

Il serait également possible de recourir aux technologies de fabrication additive.

L'invention a été décrite dans des modes de réalisation pour lesquels la chenille comporte deux rubans fermés en matériau élastomère (chenille dite souple).

Il est possible également de mettre en œuvre l'invention avec une chenille métallique formée de maillons articulés.

Dans ce cas on réalisera par exemple un ruban interne formé de maillons métalliques articulés et on fixera autour de ce ruban interne un ruban externe en matériau élastomère qui sera relié au ruban interne par des moyens de liaison. Ces derniers pourront comprendre des lames métalliques articulées sur les maillons du ruban interne et surmoulés sur des renforts métalliques du ruban externe.

Dans tous les cas l'architecture de la chenille selon l'invention permet de découpler la fonction d'entraînement qui est assurée par le ruban interne 9 et la fonction de liaison de la chenille avec le sol assurée par le ruban externe 10.

## Revendications

1. Chenille (3) destinée à équiper un véhicule, chenille comportant une bande formant une boucle fermée, bande comportant une face de roulement (3a) destinée à venir en contact avec le sol et une face interne (3b) destinée à coopérer avec au moins un barbotin (4) d'entraînement du véhicule et au moins un galet de guidage (6), chenille dans laquelle la bande comporte au moins un premier ruban fermé interne (9) qui porte la face interne (3b) et au moins un deuxième ruban fermé externe (10) qui porte la face de roulement (3a), le premier ruban (9) et le deuxième ruban (10) étant disposés à distance l'un de l'autre et reliés l'un à l'autre par au moins un moyen de liaison (11), la chenille (3) étant réalisée en au moins un matériau élastomère et les moyens de liaison (11) étant formés par des lames (11), la chenille (3) étant **caractérisée par le fait que** les lames (11) comprennent au moins un matériau métallique enrobé d'élastomère et sont localement surmoulées avec le premier ruban (9) et le deuxième ruban (10).

2. Chenille selon la revendication 1, **caractérisée en ce que** les lames (11) sont régulièrement réparties le long de la bande.

3. Chenille selon la revendication 2, **caractérisée en ce qu'**elle comporte un premier jeu de lames, ou lames externes (11a), réparties le long des deux bords latéraux (3c,3d) de la chenille et un deuxième jeu de lames, ou lames internes (11b), disposées entre les lames externes (11a).

4. Chenille (3) destinée à équiper un véhicule, chenille comportant une bande formant une boucle fermée, bande comportant une face de roulement (3a) destinée à venir en contact avec le sol et une face interne (3b) destinée à coopérer avec au moins un barbotin (4) d'entraînement du véhicule et au moins un galet de guidage (6), chenille dans laquelle la bande comporte au moins un premier ruban fermé interne (9) qui porte la face interne (3b) et au moins un deuxième ruban fermé externe (10) qui porte la face de roulement (3a), le premier ruban (9) et le deuxième ruban (10) étant disposés à distance l'un de l'autre et reliés l'un à l'autre par au moins un moyen de liaison (11), les moyens de liaison étant formés par des profils (21) comportant au moins un matériau élastomère, les profils (21) s'étendant transversalement d'un bord latéral (3c) à l'autre bord latéral (3d) de la chenille (3) et étant régulièrement répartis sur toute la longueur de la chenille (3), la chenille (3) étant **caractérisée en ce que** les profils (21) comprennent des formes hexagonales creuses (21a) reliées aux rubans (9,10) par des bras (21b).

5. Chenille (3) destinée à équiper un véhicule, chenille comportant une bande formant une boucle fermée, bande comportant une face de roulement (3a) destinée à venir en contact avec le sol et une face interne (3b) destinée à coopérer avec au moins un barbotin (4) d'entraînement du véhicule et au moins un galet de guidage (6), chenille dans laquelle la bande comporte au moins un premier ruban fermé interne (9) qui porte la face interne (3b) et au moins un deuxième ruban fermé externe (10) qui porte la face de roulement (3a), le premier ruban (9) et le deuxième ruban (10) étant disposés à distance l'un de l'autre et reliés l'un à l'autre par au moins un moyen de liaison (11), les moyens de liaison étant formés par des profils (21) comportant au moins un matériau élastomère, les profils (21) s'étendant transversalement d'un bord latéral (3c) à l'autre bord latéral (3d) de la chenille (3) et étant régulièrement répartis sur toute la longueur de la chenille (3), la chenille (3) étant **caractérisée en ce que** les profils (21) comprennent deux jeux de languettes (21a,21b), chaque jeu de languettes s'étendant d'un des rubans (9,10) jusqu'à une lame médiane (21c), les languettes (21a) liées au ruban interne (9) étant disposées en alternance avec les languettes (21b) liées au ruban externe (10).

6. Chenille selon une des revendications 1 à 5, **caractérisée en ce que** chaque ruban (9,10) comporte au moins une nappe (13) de câbles (14) de renfort métallique.

7. Chenille selon une des revendications 1 à 6, **caractérisée en ce que** la face interne (3b) portée par le premier ruban (9) comporte deux zones latérales (20a,20b) au niveau desquelles sont aménagées des encoches (18) destinées à coopérer avec des dents (17) du ou des barbotin(s) (4) d'entraînement du véhicule.

8. Chenille selon une des revendications 1 à 7, **caractérisée en ce que** la face interne (3b) porte au moins un bloc guide (23) destiné à coopérer avec au moins un sillon (22) porté par les ou les barbotins (4) et le ou les galets de guidage (6).

9. Chenille selon une des revendications 1 à 8, **caractérisée en ce que** la face interne (3b) porte au moins une languette longitudinale (25) destinée à coopérer avec au moins une rainure (24) portée par les ou les barbotins (4) et le ou les galets de guidage (6).

## Patentansprüche

1. - Raupe (3) zur Ausrüstung eines Fahrzeugs, wobei die Raupe ein Band aufweist, das eine geschlossene Schleife bildet, wobei das Band eine Rollfläche (3a) aufweist, die bestimmt ist, mit dem Boden in Kontakt zu kommen, und eine innere Fläche (3b), die zum Zusammenwirken mit mindestens einem Antriebskettenrad (4) des Fahrzeugs und mindestens einer Führungsrolle (6) bestimmt ist, wobei das Band in der Raupe mindestens einen ersten inneren geschlossenen Streifen (9) aufweist, der die innere Fläche (3b) trägt, und mindestens einen zweiten äußeren geschlossenen Streifen (10), der die Rollfläche (3a) trägt, wobei der erste Streifen (9) und der zweite Streifen (10) voneinander beabstandet angeordnet und durch mindestens ein Verbindungsmittel (11) miteinander verbunden sind, wobei die Raupe (3) aus mindestens einem Elastomermaterial hergestellt ist und die Verbindungsmittel (11) aus Lamellen (11) gebildet sind, wobei die Raupe (3) **dadurch gekennzeichnet ist, dass** die Lamellen (11) mindestens ein mit Elastomer beschichtetes Metallmaterial umfassen und lokal mit dem ersten Streifen (9) und dem zweiten Streifen (10) überformt sind.

2. - Raupe nach Anspruch 1, **dadurch gekennzeichnet, dass** die Lamellen (11) entlang des Bandes gleichmäßig verteilt sind.

3. - Raupe nach Anspruch 2, **dadurch gekennzeichnet, dass** sie einen ersten Lamellensatz oder äußere Lamellen (11a) aufweist, die entlang der beiden seitlichen Ränder (3c, 3d) der Raupe verteilt sind, und einen zweiten Lamellensatz oder innere Lamellen (11b), die zwischen den äußeren Lamellen (11a) angeordnet sind.

4. - Raupe (3) zur Ausrüstung eines Fahrzeugs, wobei die Raupe ein Band aufweist, das eine geschlossene Schleife bildet, wobei das Band eine Rollfläche (3a) aufweist, die bestimmt ist, mit dem Boden in Kontakt zu kommen, und eine innere Fläche (3b), die zum Zusammenwirken mit mindestens einem Antriebskettenrad (4) des Fahrzeugs und mindestens einer Führungsrolle (6) bestimmt ist, wobei das Band in der Raupe mindestens einen ersten inneren geschlossenen Streifen (9) aufweist, der die innere Fläche (3b) trägt, und mindestens einen zweiten äußeren geschlossenen Streifen (10), der die Rollfläche (3a) trägt, wobei der erste Streifen (9) und der zweite Streifen (10) voneinander beabstandet angeordnet und durch mindestens ein Verbindungsmittel (11) miteinander verbunden sind, wobei die Verbindungsmittel (21) von Profilen (21) gebildet sind, die mindestens ein Elastomermaterial aufweisen, wobei sich die Profile (21) quer von einem seitlichen Rand (3c) zum anderen seitlichen Rand (3d) der Raupe (3) erstrecken und über die gesamte Länge der Raupe (3) gleichmäßig beabstandet sind, wobei die Raupe (3) **dadurch gekennzeichnet ist, dass** die Profile (21) sechseckige Hohlprofile (21a) umfassen, die mit den Streifen (9, 10) durch Arme (21b) verbunden sind.

5. - Raupe (3) zur Ausrüstung eines Fahrzeugs, wobei die Raupe ein Band aufweist, das eine geschlossene Schleife bildet, wobei das Band eine Rollfläche (3a) aufweist, die bestimmt ist, mit dem Boden in Kontakt zu kommen, und eine innere Fläche (3b), die zum Zusammenwirken mit mindestens einem Antriebskettenrad (4) des Fahrzeugs und mindestens einer Führungsrolle (6) bestimmt ist, wobei das Band in der Raupe mindestens einen ersten inneren geschlossenen Streifen (9) aufweist, der die innere Fläche (3b) trägt, und mindestens einen zweiten äußeren geschlossenen Streifen (10), der die Rollfläche (3a) trägt, wobei der erste Streifen (9) und der zweite Streifen (10) voneinander beabstandet angeordnet und durch mindestens ein Verbindungsmittel (11) miteinander verbunden sind, wobei die Verbindungsmittel von Profilen (21) gebildet sind, die mindestens ein Elastomermaterial aufweisen, wobei sich die Profile (21) quer von einem seitlichen Rand (3c) zum anderen seitlichen Rand (3d) der Raupe (3) erstrecken und über die gesamte Länge der Raupe (3) gleichmäßig beabstandet sind, wobei die Raupe (3) **dadurch gekennzeichnet ist, dass** die Profile (21) zwei Laschensätze (21a, 21b) umfassen, wobei sich jeder Laschensatz von einem der Streifen (9, 10) bis zu einer mittleren Lamelle (21c) erstreckt, wobei die mit dem inneren Streifen (9) verbundenen Laschen (21a) abwechselnd mit den Laschen (21b) angeordnet sind, die mit dem äußeren Streifen (10) verbunden sind.

6. - Raupe nach einem der Ansprüche 1 bis 5, **dadurch gekennzeichnet, dass** jeder Streifen (9, 10) mindestens eine Matte (13) aus metallischen Verstärkungskabeln (14) aufweist.

7. - Raupe nach einem der Ansprüche 1 bis 6, **dadurch gekennzeichnet, dass** die innere Fläche (3b), die vom ersten Streifen (9) getragen wird, zwei seitliche Zonen (20a, 20b) aufweist, in deren Bereich Kerben (18) ausgebildet sind, die zum Zusammenwirken mit Zähnen (17) des oder der Antriebskettenrads/-räder (4) des Fahrzeugs bestimmt sind.

8. - Raupe nach einem der Ansprüche 1 bis 7, **dadurch gekennzeichnet, dass** die innere Fläche (3b) mindestens einen Führungsblock (23) trägt, der zum Zusammenwirken mit mindestens einer Furche (22) bestimmt ist, die von dem oder den Kettenrädern (4) und der oder den Führungsrollen (6) getragen wird.

9. - Raupe nach einem der Ansprüche 1 bis 8, **dadurch gekennzeichnet, dass** die innere Fläche (3b) mindestens eine Längslasche (25) trägt, die zum Zusammenwirken mit mindestens einer Rille (24) bestimmt ist, die von dem oder den Kettenrädern (4) und der oder den Führungsrollen (6) getragen wird.

## Claims

1. - A track (3) intended to equip a vehicle, the track comprising a strip forming a closed loop, the strip comprising a running surface (3a) intended to come into contact with the ground and an inner surface (3b) intended to cooperate with at least one drive sprocket (4) of the vehicle and at least one guide roller (6), in which track the strip comprises at least one first closed inner band (9) that bears the inner surface (3b) and at least one second closed outer band (10) that bears the running surface (3a), the first band (9) and the second band (10) being arranged at a distance from one another and connected to one another by at least one linking means (11), the track (3) being made from at least one elastomer material and the linking means (11) being formed by slats (11), the track (3) being **characterized in that** the slats (11) comprise at least one metal material embedded in elastomer and are locally overmolded with the first band (9) and the second band (10).

2. - The track according to claim 1, **characterized in that** the slats (11) are evenly distributed along the strip.

3. - The track according to claim 2, **characterized in that** it comprises a first set of slats, or outer slats (11a), distributed along two lateral edges (3c, 3d) of the track and a second set of slats, or inner slats (11b), arranged between the outer slats (11a).

4. - A track (3) intended to equip a vehicle, the track comprising a strip forming a closed loop, the strip comprising a running surface (3a) intended to come into contact with the ground and an inner surface (3b) intended to cooperate with at least one drive sprocket (4) of the vehicle and at least one guide roller (6), in which track the strip comprises at least one first closed inner band (9) that bears the inner surface (3b) and at least one second closed outer band (10) that bears the running surface (3a), the first band (9) and the second band (10) being arranged at a distance from one another and connected to one another by at least one linking means (11), the linking means being formed by profiles (21) comprising at least one elastomer material, the profiles (21) extending transversely from one lateral edge (3c) to the other lateral edge (3d) of the track (3) and being evenly distributed over the entire length of the track (3), the track (3) being **characterized in that** the profiles (21) comprise hollow hexagonal shapes (21a) connected to the band (9, 10) by arms (21b).

5. - A track (3) intended to equip a vehicle, the track comprising a strip forming a closed loop, the strip comprising a running surface (3a) intended to come into contact with the ground and an inner surface (3b) intended to cooperate with at least one drive sprocket (4) of the vehicle and at least one guide roller (6), in which track the strip comprises at least one first closed inner band (9) that bears the inner surface (3b) and at least one second closed outer band (10) that bears the running surface (3a), the first band (9) and the second band (10) being arranged at a distance from one another and connected to one another by at least one linking means (11), the linking means being formed by profiles (21) comprising at least one elastomer material, the profiles (21) extending transversely from one lateral edge (3c) to the other lateral edge (3d) of the track (3) and being evenly distributed over the entire length of the track (3), the track (3) being **characterized in that** the profiles (21) comprise two sets of tongues (21a, 21b), each set of tongues extending from one of the bands (9, 10) to a median slat (21c), the tongues (21a) linked to the inner band (9) being arranged alternating with the tongues (21b) linked to the outer band (10).

6. - The track according to one of claims 1 to 5, **characterized in that** each band (9, 10) comprises at least one ply (13) of metal reinforcing cables (14).

7. - The track according to one of claims 1 to 6, **characterized in that** the inner surface (3b) borne by the first band (9) comprises two lateral zones (20a, 20b) at which notches (18) are arranged which are intended to cooperate with teeth (17) of the drive sprocket (s) (4) of the vehicle.

8. - The track according to one of claims 1 to 7, **characterized in that** the inner surface (3b) bears at least one guide block (23) intended to cooperate with at least one slot (22) borne by the sprocket (s) (4) and the guide roller(s) (6).

9. - The track according to one of claims 1 to 8, **characterized in that** the inner surface (3b) bears at least one longitudinal tongue (25) intended to cooperate with at least one groove (24) borne by the sprocket(s) (4) and the guide roller(s) (6) .
